# EUROPÄISCHE PATENTSCHRIFT

(11) **EP 1 890 109 B1**
(45) Veröffentlichungstag und Bekanntmachung des Hinweises auf die Patenterteilung: **06.10.2010**
(21) Anmeldenummer: 07114311.9
(22) Anmeldetag: 14.08.2007
(51) Int. Cl.: G01C 21/32, G08G 1/09

(54) **Endgerät eines Navigationssystems und entsprechendes Verfahren zur Übermittlung von Daten und/oder Informationen von diesem Endgerät**
Terminal in a navigation system and corresponding method for transmitting data and/or information from said terminal
Terminal d'un système de navigation et procédé associé destiné à la transmission de données et/ou d'informations dudit terminal

(30) Priorität: 16.08.2006 DE 102006038145
(43) Veröffentlichungstag der Anmeldung: 20.02.2008
(73) Patentinhaber: Vodafone Holding GmbH, 40027 Düsseldorf (DE)
(72) Erfinder: Dietz, Ulrich, 81669, München (DE)
(74) Vertreter: Cullinane, Marietta Bettina

(56) Entgegenhaltungen:
- EP-A- 1 530 025
- DE-A1- 19 701 370
- DE-A1- 19 742 414
- DE-A1-102005 039 893

## Beschreibung

Die vorliegende Erfindung betrifft ein Endgerät eines Navigationssystems und ein Verfahren zur Übermittlung von Daten und/oder Informationen von einem Endgerät eines Navigationssystems.

Zur Erleichterung der Navigation eines Fahrzeuges, insbesondere in Gebieten, die dem Fahrer nicht vertraut sind, sind Navigationssysteme entwickelt worden, bei denen dem Fahrer Anweisungen über die einzuhaltende Route gegeben werden können. Bei diesen Systemen ist in der Regel in einem, in dem Fahrzeug befindlichen, Endgerät eine digitale Karte hinterlegt (oder wird - besonders bei Off-Board-Navigationssystemem - bei Bedarf geladen), deren Koordinaten mit Positionskoordinaten des Fahrzeuges verglichen werden. Die Positionskoordinaten können über Positionsbestimmungsgeräte, wie beispielsweise GPS (Global Positioning System) bestimmt werden. Durch Eingabe eines gewünschten Fahrziels wird, anhand der aktuellen Position des Fahrzeuges und der in der digitalen Karte hinterlegten Straßenverläufe, der Weg zur Erreichung des Zielortes bestimmt. Die notwendigen Richtungswechsel zum Erreichen des Zielortes können dem Fahrer an dem Endgerät angezeigt oder dort mittels Sprachsignalen ausgegeben werden.

Ein Problem, das bei Navigationssystemen erkannt wurde, ist, dass die Kartendaten, aufgrund derer die Route berechnet und die entsprechenden Anweisungen gegeben werden, stets auf dem neuesten Stand sein müssen, um eine zutreffende Navigation an den Zielort gewährleisten zu können.

Hierzu werden in der DE 197 42 414 C2 ein Verfahren und ein Endgerät zur Aktualisierung und/oder Ergänzung einer digitalen Straßenkarte eines Verkehrsnetzes vorgeschlagen. Bei diesem Verfahren wird von dem Endgerät die Position des Fahrzeuges wiederholt erfasst und diese Position wird einer digitalen Straßenkarte im Endgerät zugeordnet. Hierbei wird überprüft, ob sich an einer der erfassten Position des Fahrzeuges zugeordneten Position in der digitalen Straßenkarte eine Straße befindet. Ist dies nicht der Fall, so informiert das Endgerät eine Verkehrszentrale und eine in dieser Zentrale hinterlegte digitale Straßenkarte wird entsprechend aktualisiert oder ergänzt.

Auch in der EP 1 530 025 A1 wird ein Navigationssystem beschrieben, bei dem Fehler in Kartenmaterial erkannt werden können. Hierbei wird eine Datenbank-Fehler-Korrektur-Komponente verwendet, die Unterschiede zwischen einer digitalen Karte und der aktuellen Position eines Fahrzeuges erkennt.

Der Nachteil dieses bekannten Verfahrens besteht darin, dass mittels dieses Verfahrens nur Auslassungen oder Fehler einer Straßenkarte erkannt werden können, sofern sich das Fahrzeug an der dieser Auslassung oder diesem Fehler zugeordneten Position befindet. Eine falsche Anweisung durch das Navigationssystem an dem Endgerät, die nicht durch eine Auslassung auf der digitalen Karte verursacht wird, sondern beispielsweise durch einen Programmfehler oder einen Fehler im Kartenmaterial, durch den eine Anzeige von Straßen und Straßenabschnitten in der digitalen Karte erfolgt, die tatsächlich nicht bestehen, kann durch dieses Verfahren nicht erkannt werden.

Weiterhin ist in der US 6,253,151 B1 ein Navigationssystem mit der Möglichkeit des Berichts von Fehlern beschrieben. Dieses Navigationssystem umfasst ein Berichtsprogramm, das durch den Benutzer aktiviert wird. Insbesondere umfasst das Berichtsprogramm eine Überwachungskomponente, die Daten des Navigationssystems speichert. Bei diesem Navigationssystem muss der Benutzer das Vorliegen eines Fehlers erkennen. Durch entsprechendes Betätigen einer Taste kann der Benutzer dann die Erstellung eines Berichts anfordern. Ein Nachteil dieses Navigationssystems besteht darin, dass die Fehlererkennung allein durch den Benutzer erfolgen muss, der dann die Erstellung des Berichts anfordert.

Aufgabe der vorliegenden Erfindung ist es daher eine Lösung zu schaffen mittels derer die Qualität eines Navigationssystems überwacht und auf einfache Weise verbessert werden kann.

Der Erfindung liegt die Erkenntnis zugrunde, dass diese Aufgabe gelöst werden kann, indem für den Fahrer eine Möglichkeit geschaffen wird, das Vorliegen eines Fehlers innerhalb des Navigationssystems zu kommunizieren.

Die Aufgabe wird gelöst durch ein Endgerät für ein Navigationssystem und ein Verfahren zur Übermittlung von Daten und/oder Informationen von dem Endgerät des Navigationssystems mit den Merkmalen der unabhängigen Patentansprüche. Vorteile und Merkmale, die bezüglich des erfindungsgemäßen Endgerätes beschrieben werden, gelten -soweit anwendbar- entsprechend für das erfindungsgemäße Verfahren und umgekehrt.

Gemäß einem ersten Aspekt wird die Aufgabe gelöst durch ein Verfahren zur Übermittlung von Daten und/oder Informationen von einem Endgerät eines Navigationssystems. Das Verfahren ist durch folgende von dem Endgerät ausgeführten Schritte gekennzeichnet:
a) Erkennen eines Initialisierungssignals, das durch ein von dem Benutzer betätigbares Betätigungselement, das mit einer Initialisierungseinheit verbunden ist, erzeugt wird,
b) Ermitteln von zu übermittelnden Daten und/oder Informationen in dem Endgerät und
c) Aktivierung eines Kommunikationsmittels, das eine Kommunikationsschnittstelle darstellt, zur Kommunikation mit mindestens einer zentralen Einheit des Navigationssystems, die eine zentrale Rechnereinheit des Herstellers oder Betreibers des Navigationssystems oder eine zentrale Rechnereinheit des Kartenherstellers ist, aufgrund des erkannten Initialisierungssignals.
Das Verfahren ist **dadurch gekennzeichnet, dass** das das Verfahren weiterhin den Schritt umfasst, dass von dem Endgerät erzeugte Anweisungen zum Richtungswechsel oder zur Beibehaltung einer gewissen Richtung an den Benutzer mit Richtungs- oder Positionsinformationen, die von dem Endgerät erfasst wurden, verglichen werden und das Endgerät in Abhängigkeit des Vergleichsergebnisses die Initialisierungseinheit aktiviert und
dass das Verfahren weiterhin den Schritt umfasst, dass Daten und/oder Informationen, die die Diskrepanz zwischen von dem Endgerät erzeugten Anweisungen und von dem Endgerät erfassten Positions- und/oder Richtungsinformationen umfassen, unmittelbar nach der Ermittlung der Daten und/oder Informationen über die Kommunikationsschnittstelle an die mindestens eine zentrale Einheit übermittelt werden.

Das Endgerät stellt insbesondere ein Navigationsgerät beziehungsweise Navigationsendgerät dar, das in einem Fahrzeug mitgeführt wird. Das Endgerät kann fest in dem Fahrzeug eingebaut sein oder aber nur zeitweise in das Fahrzeug eingebracht werden.

Die zentrale Einheit kann eine dem Hersteller oder Betreiber des Navigationssystems zugeordnete Rechnereinheit sein. Weiterhin oder alternativ kann die zentrale Einheit eine dem Kartenhersteller zugeordnete Rechnereinheit sein.

Indem die Aktivierung des Kommunikationsmittels durch ein Initialisierungssignal hergestellt wird, das durch einen Benutzer ausgelöst werden kann, wird die Möglichkeit geschaffen auf einfache Weise ein Feedback über die Qualität des Navigationssystem zu liefern. Im Gegensatz zu einer automatischen Übermittlung oder Speicherung von Daten und/oder Informationen von dem Endgerät an eine oder mehrere zentrale Einheiten kann bei dem erfindungsgemäßen Verfahren die Übermittlung von Daten und/oder Informationen auf Situationen beschränkt werden, in denen die Qualität des Navigationssystems zu beanstanden ist. Die Datenbeziehungsweise Informationsübermittlung kann hierdurch auf ein Minimum beschränkt werden. Zudem kann die Übermittlung gezielt erfolgen.

Erfindungsgemäß stellt das Kommunikationsmittel eine Kommunikationsschnittstelle, beispielsweise ein Modul, dar, über die die ermittelten Daten und/oder Informationen an die zentrale Einheit übermittelt werden können. Das Verfahren umfasst bei dieser Ausführungsform die Übermittlung der ermittelten Daten und/oder Informationen an die zentrale Einheit über die Kommunikationsschnittstelle. Vor der Übermittlung können die ermittelten Daten und/oder Informationen formatiert und gegebenenfalls zwischengespeichert werden. Erfindungsgemäß ist es aber vorgesehen, die Daten und/oder Informationen unmittelbar nach der Ermittelung, das heißt dem Zusammentragen an die zentrale Einheit zu übermitteln.

Die Aktivierung der Kommunikationsschnittstelle ist erfindungsgemäß vorzugsweise die Herstellung beziehungsweise der Aufbau der Kommunikationsverbindung mit mindestens einer zentralen Einheit. Bei bereits bestehender Kommunikationsverbindung mit der entsprechenden zentralen Einheit wird unter der Aktivierung der Kommunikationsschnittstelle erfindungsgemäß das Bereitstellen der Verbindung zur Übermittlung von ausgewählten Daten und/oder Informationen verstanden. Die eingerichtete aber ruhende Kommunikationsschnittstelle wird erfindungsgemäß für das Verschicken von Berichten nur dann aktiviert, wenn ein Initialisierungssignal vorliegt. Das Initialisierungssignal zeigt an, dass der Benutzer die Verbindung zu der zentralen Einheit herstellen will, insbesondere, dass ein Bericht an die zentrale Einheit des Navigationssystems gesendet werden soll. Die Angaben, die in dem Bericht enthalten sein sollen, können vor dem Erkennen des Initialisierungssignals gesammelt, insbesondere von Speichereinheiten an dem Endgerät ausgelesen worden sein. Es ist aber auch möglich, dass die Angaben erst nach dem Erkennen des Initialisierungssignals ermittelt wurden. Insofern kann die Reihenfolge der in dem Endgerät durchzuführenden Schritte von der oben genannten Reihenfolge abweichen.

Die Daten und / oder Informationen, die an die zentrale Einheit übermittelt werden, werden in dem Endgerät ermittelt. Hierbei können Daten und/oder Informationen berücksichtigt werden, die in dem Endgerät zwischengespeichert sind. Die Daten und / oder Informationen sind insbesondere Daten und / oder Informationen, die durch entsprechende Einrichtungen des Endgerätes erfasst beziehungsweise gemessen wurden oder Daten und / oder Informationen, die am Endgerät empfangen wurden. Empfangene Daten und / oder Informationen sind in diesem Zusammenhang beispielsweise Karteninformationen. Diese können beispielsweise von einer der zentralen Einheit übermittelt worden sein.

Handelt es sich bei dem Endgerät um ein so genanntes Off-Board-Navigationsgerät, so können Karteninformationen in diesem Zusammenhang Informationen betreffend einer im Backendbereich des Navigationssystems hinterlegten digitalen Karte sein, die zur Anzeige eines Kartenausschnitts als Kartenausschnitt zusammen mit weiteren Informationen an das Endgerät übermittelt werden. Handelt es sich bei dem Endgerät um ein so genanntes On-Board-Navigationsgerät, ist die digitale Karte in der Regel in diesem Endgerät hinterlegt. In diesem Fall kann die digitale Karte als die Karteninformationen verstanden werden, die in geeigneter Form von der zentralen Einheit empfangen wurden. Die zentrale Einheit stellt hierbei beispielsweise den Kartenhersteller dar und die Übermittlung der Karteninformationen kann durch Herunterladen auf das Endgerät oder durch Aufspielen der Informationen auf das Endgerät bei dessen Herstellung erfolgen.

Weiterhin können empfangene Daten und / oder Informationen von dem Benutzer stammen, der diese Daten und / oder Informationen in das Endgerät eingegeben hat. Die hinterlegten Daten und / oder Informationen können auch Voreinstellungen beinhalten, nach denen eine standardisierte Nachricht, insbesondere ein Bericht, übermittelt wird.

Die Ermittlung der zu übertragenden Daten und / oder Informationen kann durch Auslesen aus einem in dem Endgerät vorgesehenen Speicher erfolgen. Werden die Daten und / oder Informationen durch den Benutzer eingegeben, kann die Ermittlung auch eine Weiterleitung der eingegebenen Daten und / oder Informationen darstellen.

In dem Endgerät kann eine Speichereinheit vorgesehen sein, mittels derer Daten und/oder Informationen in dem Endgerät zumindest zeitweise abgespeichert beziehungsweise abgelegt werden können.

Bei einer Speicherung von Daten und/oder Informationen können die unter Bezug auf die erfindungsgemäße Übermittlung über die Kommunikationsschnittstelle beschriebenen Daten und/Informationen verwendet werden. Insbesondere werden in der Speichereinheit aufgrund des Initialisierungssignals aktuelle Daten, vorzugsweise in Kombination, beispielsweise in Form eines Berichts gespeichert. Die Speichereinheit, die hierzu verwendet wird, kann die gleiche Speichereinheit sein, auf der Daten in dem Endgerät hinterlegt sind und von der beispielsweise Kartendaten ausgelesen werden. Es ist aber auch möglich eine separate Speichereinheit vorzusehen, auf der die Daten und/oder Informationen bei Erkennen des Initialisierungssignals gespeichert werden.

Durch das Speichern von Daten und/oder Informationen beim Erkennen eines Initialisierungssignals können diese zu einem späteren Zeitpunkt an eine zentrale Einheit des Navigationssystems übermittelt werden. Die Übermittlung kann hierbei über die Kommunikationsschnittstelle an dem Endgerät erfolgen. Es ist aber auch möglich, dass die Daten und/oder Informationen von der Speichereinheit durch eine separate Auslesevorrichtung ausgelesen und an die zentrale Einheit übermittelt werden. Handelt es sich bei der Speichereinheit um eine lösbar mit dem Endgerät verbundene Einheit, wie beispielsweise eine Speicherkarte oder einen Memorystick, so kann die Speichereinheit beispielsweise aus dem Endgerät entnommen und in einen Rechner eingeführt werden. Dieser Rechner kann dabei sowohl zum Auslesen der Daten und/oder Informationen dienen als auch zur Übermittlung an eine zentrale Einheit. Die Übermittlung kann beispielsweise über das Internet erfolgen, wenn der Benutzer die Homepage des Herstellers des Kartenmaterials oder die Homepage des Navigationssystembetreibers aufruft oder die vom Hersteller mitgelieferte PC-Software zur Aktualisierung nutzt, Zusatzservices nutzt oder am PC mit der Software die nächste Route plant.

Erfindungsgemäß umfasst das erfindungsgemäße Verfahren den Schritt, dass von dem Endgerät erzeugte Anweisungen an den Benutzer mit Richtungs- oder Positionsinformationen, die von dem Endgerät erfasst wurden, verglichen werden.

Anweisungen an den Benutzer des Navigationssystems stellen erfindungsgemäß Anweisungen zum Richtungswechsel oder zur Beibehaltung einer gewissen Richtung, gegebenenfalls in Verbindung mit einer Entfernungsangabe, dar. Diese Informationen werden erfindungsgemäß mit tatsächlich erfassten beziehungsweise gemessenen Richtungs- oder Positionsinformationen verglichen werden. Die Richtungs- oder Positionsinformationen, die den tatsächlichen Gegebenheiten entsprechen, können beispielsweise durch Positionsbestimmungssysteme, wie GPS, ermittelt werden oder aufgrund von Sensordaten, die beispielsweise die Winkeländerung des Lenkrades anzeigen, bestimmt werden. Ist das Endgerät fest in dem Fahrzeug eingebaut, insbesondere an die Elektronik des Fahrzeuges angeschlossen, so können die Richtungs- oder Positionsdaten beispielsweise über den Zugriff auf die Fahrzeugelektronik, insbesondere durch Zugriff auf den CAN-Bus erfolgen. Handelt es sich bei dem Endgerät hingegen um ein Endgerät, das keine Anbindung an die Elektronik des Fahrzeuges aufweist, so können die Richtungs- oder Positionsinformationen beispielsweise durch Zugriff auf die Fahrzeugelektronik mittels drahtloser Kommunikation erhalten werden. Hierzu können die bekannten Nahbereichfunkverfahren, wie beispielsweise Bluetooth, eingesetzt werden.

Die Anweisungen werden in dem Endgerät in der Regel aufgrund von Kartenmaterial oder Kartendaten einer digitalen Straßenkarte erstellt. Indem die so ermittelten Anweisungen mit dem tatsächlichen Verhalten des Fahrzeuges, in dem sich das Endgerät befindet, verglichen werden, können Abweichungen erkannt werden.

Erfindungsgemäß wird vorzugsweise das Ergebnis dieses Vergleiches verwendet, um bestimmte Aktionen in dem Endgerät hervorzurufen beziehungsweise auszulösen.

Beispielsweise wird in Abhängigkeit des Vergleichsergebnisses die Erzeugung des Initialisierungssignals ermöglicht. Das Ermöglichen der Signalerzeugung kann durch Herstellung einer Verbindung zwischen dem Betätigungselement und der Initialisierungseinheit, die das Signal erzeugt, realisiert werden. Somit kann die Erzeugung eines Initialisierungssignals auf die Fälle beschränkt werden, in denen eine Abweichung zwischen den Anweisungen des Endgerätes und den tatsächlichen Bedingungen vorliegt.

Erfindungsgemäß aktiviert das Endgerät in Abhängigkeit des Vergleichsergebnisses die Initialisierungseinheit. Durch die Aktivierung der Initialisierungseinheit kann beispielsweise eine entsprechende Anzeige an dem Endgerät erzeugt werden, die den Benutzer dazu bewegt das Betätigungselement zu bedienen.

Weiterhin ist es auch möglich, dass das Endgerät in Abhängigkeit des Vergleichsergebnisses die Verbindung zu der Kommunikationsschnittstelle herstellt und deren Aktivierung durch ein Initialisierungssignal ermöglicht. Auch in diesem Fall wird nur in den Fällen, in denen eine Abweichung festgestellt wird, eine Aktivierung der Kommunikationsstelle und damit eine Übermittlung an die zentrale Einheit ermöglicht.

Zusätzlich kann in Abhängigkeit des Vergleichsergebnisses die Verbindung zu der Speichereinheit hergestellt werden und die Aktivierung der Speichereinheit durch das Initialisierungssignal ermöglicht. Als Aktivierung der Speichereinheit wird hierbei die Möglichkeit des Aufladen von Daten und/oder Informationen auf die Speichereinheit beziehungsweise des Beschreibens der Speichereinheit verstanden. Hierdurch wird gewährleistet, dass nur dann Daten und Informationen gespeichert werden können, wenn das Verhalten des Fahrers von den Anweisungen des Navigationssystems abweicht.

Die zu übermittelnden Daten und/oder Informationen können von dem Endgerät empfangene beziehungsweise erfasste Daten und/oder Informationen sein oder in dem Endgerät erzeugt werden. Als zu übermittelnde Daten werden in diesem Zusammenhang die Daten und / Informationen, die über die Kommunikationsschnittstelle an die zentrale Einheit übermittelt werden sollen verstanden. Von dem Endgerät erfasste Daten und/oder Informationen sind insbesondere Positionsangaben des Endgerätes und Richtungsangaben des Endgerätes. Hingegen können von dem Endgerät empfangene Daten und/oder Informationen Kartendaten oder Angaben des Benutzers über eine vorliegende Situation sein. Weiterhin können auch weitere Angaben, die in dem Endgerät hinterlegt sind, wie beispielsweise ein vorprogrammierter Bericht, Daten und / oder Informationen sein, die an die zentrale Einheit übermittelt werden.

Die Daten und / oder Informationen können sich insbesondere auf die Position des Endgerätes und damit auf die Position des Fahrzeuges, in dem sich das Endgerät befindet, beziehen. Weiterhin können Richtungsinformationen verwendet werden.

Die Daten und/oder Informationen können zumindest teilweise von dem Benutzer in das Endgerät eingegeben werden. Hierdurch können Faktoren berücksichtigt werden, die von Sensoren oder anderen Erfassungsvorrichtungen nicht erkannt werden können.

Die übermittelten Daten und/oder Informationen umfassen erfindungsgemäß die Diskrepanz zwischen von dem Endgerät erzeugten Anweisungen und von dem Endgerät erfassten Positions- und/oder Richtungsinformationen. Hierdurch erhält die zentrale Einheit Angaben über Abweichungen von dem normalen Betriebszustand des Endgerätes beziehungsweise über Fehler in dem verwendeten Kartenmaterial.

Das Endgerät kann über die Kommunikationsschnittstelle zur Kommunikation mit der zentralen Einheit eine Verbindung zu einem mobilen Endgerät, insbesondere einem Mobiltelefon, aufbauen, über das die Kommunikation zwischen dem Endgerät und der zentralen Einheit geleitet werden kann. Hierdurch kann auch eine Kommunikation zwischen dem Endgerät und der zentralen Einheit hergestellt werden, wenn das Endgerät selber nicht für eine Kommunikation mit einer weit beabstandeten Einheit ausgelegt ist. Die Kommunikation zwischen dem Endgerät und dem Mobiltelefon kann mittels bekannter Nahbereichtechnologien, wie beispielsweise Bluetooth, WLAN, UWB (Ultra-Wide-Band) und dergleichen, realisiert werden und das Mobilfunktelefon dadurch an das Endgerät gekoppelt werden. Die Kommunikation zwischen dem Mobilfunktelefon und der zentralen Einheit kann per GPRS, oder anderen Standards wie 3G oder 4G/B3G (Beyond 3rd Generation) erfolgen.
Im Falle des Versands vom PC aus, wird das Gerät mit einem PC gekoppelt (Cradle) und die zwischengespeicherten Daten mittels einer Internetverbindung (HTTP, Email oä.) versandt.

An der zentralen Einheit können die von dem Endgerät empfangenen Daten und / oder Informationen mit Karteninformationen einer digitalen Karte verarbeitet werden. Insbesondere kann eine Anpassung der Kartendaten beziehungsweise des Kartenmaterials anhand der empfangenen Daten und / oder Informationen erfolgen.

Alternativ oder zusätzlich können an der zentralen Einheit die von dem Endgerät empfangenen Daten und/oder Informationen zumindest zeitweise gespeichert werden. Hierdurch stehen die Daten und / oder Informationen für eine weitere Verwendung, wie beispielsweise eine Ausgabe an Personal zur Überprüfung der Situation zur Verfügung.

Gemäß einem weiteren Aspekt der Erfindung betrifft diese ein Endgerät eines Navigationssystems, das eine Anweisungseinheit zur Erzeugung von Anweisungen zum Richtungswechsel oder zur Beibehaltung einer gewissen Richtung an den Benutzer des Endgerätes, zumindest ein Kommunikationsmittel und zumindest eine Initialisierungseinheit umfasst, wobei das Kommunikationsmittel eine Kommunikationsschnittstelle zur Kommunikation mit mindestens einer zentralen Einheit des Navigationssystems, die eine zentrale Rechnereinheit des Herstellers oder Betreibers des Navigationssystems oder eine zentrale Rechnereinheit des Kartenherstellers ist, darstellt und die Initialisierungseinheit zur Erzeugung eines Initialisierungssignals zum Initialisieren der Kommunikation mit der zentralen Einheit durch den Benutzer des Endgerätes dient, wobei die Initialisierungseinheit mit der Kommunikationsschnittstelle verbunden ist. Das Endgerät ist **dadurch gekennzeichnet, dass** das Endgerät eine Vergleichseinheit umfasst, wobei die Vergleichseinheit mit dem Ausgang der Anweisungseinheit zum Vergleichen von mindestens einer erzeugten Anweisung an den Benutzer mit mindestens einer von dem Endgerät erfassten Richtungs- oder Positionsinformation verbunden ist, die Vergleichseinheit mit der Initialisierungseinheit zum Aktivieren der Initialisierungseinheit in Abhängigkeit des Vergleichsergebnisses verbunden ist und über das Kommunikationsmittel Daten und/oder Informationen unmittelbar nach deren Ermittlung an mindestens eine zentrale Einheit übermittelt werden, wobei die übermittelten Daten und/oder Informationen die Diskrepanz zwischen von dem Endgerät erzeugten Anweisungen und von dem Endgerät erfassten Positions- und/oder Richtungsinformationen umfassen.

Vorzugsweise umfasst das Endgerät zumindest eine Eingabevorrichtung zur Eingabe von Informationen durch den Benutzer. Diese kann beispielsweise eine Tastatur darstellen und kann das Betätigungselement des Endgerätes umfassen. Die Eingabevorrichtung kann als genannte Hardkeys, in Form von Tasten umfassen. Es ist aber auch möglich als Eingabevorrichtung einen Touchscreen zu verwenden. Weiterhin können so genannte Softkeys verwendet werden, bei denen einer mechanischen Vorrichtung, wie einer Taste die Funktionen zeitweise zugeordnet werden. Schließlich ist auch die Verwendung von Dialogboxen an einer Anzeige beziehungsweise auf einem Screen möglich.

Eine in dem Endgerät vorgesehene Speichereinheit zum Speichern von Daten und/oder Informationen aufgrund des Initialisierungssignals kann in Form von RAM (Random Access Memory), ROM, EEPROM, einer Festplatte und/oder einem Memorystick (alle Arten von austauschbaren Speicherriegel wie einem Memorystick oder SD-Card) vorliegen. Auf dieser Speichereinheit oder auf einer separaten Speichereinheit können zusätzlich zu den Daten und/oder Informationen, die aufgrund des Initialisierungssignals gespeichert werden, auch im Endgerät erfasste oder auch empfangene Daten und / oder Informationen hinterlegt werden beziehungsweise sein. Aus der oder den Speichereinheiten können die an die zentrale Einheit zu übermittelnden Daten und/oder Informationen ausgelesen werden.

Die Initialisierungseinheit kann einen Betätigungsknopf umfassen, der optional auf einer Anzeige des Endgerätes angezeigt wird. Es ist auch möglich, dass die Verfügbarkeit der Initialisierungseinheit auf einer Anzeige angezeigt wird und durch das Betätigungselement aktiviert werden kann. Das Betätigungselement kann als genannte Hardkeys, in Form von Tasten umfassen. Es ist aber auch möglich als Betätigungselement einen Touchscreen zu verwenden. Weiterhin können so genannte Softkeys verwendet werden, bei denen einer mechanischen Vorrichtung, wie einer Taste die Funktionen zeitweise zugeordnet werden. Schließlich ist auch die Verwendung von Dialogboxen an einer Anzeige beziehungsweise auf einem Screen möglich.

Das erfindungsgemäße Endgerät ist vorzugsweise zur Ausführung des erfindungsgemäßen Verfahrens ausgelegt.

Die Erfindung wird im Folgenden erneut anhand der beiliegenden Figuren erläutert. Es zweigen:
Figur 1: eine schematische Ansicht der Komponenten eines Navigationssystems;
Figur 2: eine schematische Ansicht eines Straßenverlaufs; und
Figur 3: eine schematische Ansicht eines weiteren Straßenverlaufs.

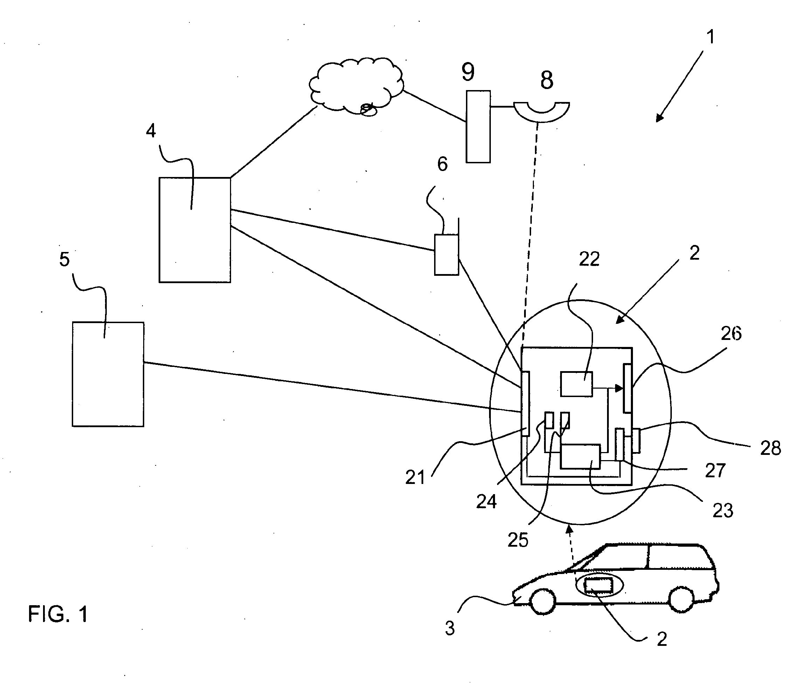

In Figur 1 sind einige Komponenten eines Navigationssystems 1 dargestellt. Insbesondere umfasst das Navigationssystem 1 ein Endgerät 2, das in einem Fahrzeug 3 geführt wird. Weiterhin sind in der Figur 1 zwei zentrale Einheiten 4 und 5 dargestellt. Eine dieser zentralen Einheiten 4 kann beispielsweise eine zentrale Rechnereinheit des Betreibers oder Herstellers des Navigationssystems 1 sein. Die weitere zentrale Einheit 5 kann beispielsweise eine zentrale Rechnereinheit des Herstellers des in dem Navigationssystem verwendeten digitalen Kartenmaterials darstellen. Das Kartenmaterial wird insbesondere durch digitale Karten bereitgestellt.

Das Endgerät 2 weist eine Kommunikationsschnittstelle 21 zur Kommunikation mit mindestens einer der zentralen Einheiten 4, 5 auf. Diese Kommunikation kann, wie in der Figur 1 schematisch angedeutet, auch über ein mobiles Endgerät, das beispielsweise ein mit dem Endgerät 2 gepairtes Mobiltelefon 6 sein kann, erfolgen.

Weiterhin ist in der Figur 1 ein so genanntes Cradle 8 zur zeitweiligen Aufnahme des Endgerätes 2 gezeigt. Dieses ist mit einem Rechner 9 des Benutzers des Endgerätes 2 verbunden. Über das Internet kann dieser Rechner 9 auf zumindest eine der zentralen Einheiten 4 zugreifen beziehungsweise Daten und/oder Informationen an diese Einheit 4 übermitteln. Ist das Endgerät 2 in dem Cradle 8 aufgenommen, so können die in einer Speichereinheit 24 des Endgerätes 2 gespeicherten Daten an den Rechner 9 übertragen werden.

Weiterhin sind in dem Endgerät 2 eine Anweisungseinheit 22 sowie eine Vergleichseinheit 23 vorgesehen. Die Vergleichseinheit 23 ist mit dem Signalausgang der Anweisungseinheit 22 verbunden. Die Anweisungseinheit 22 ist in der dargestellten Ausführungsform mit einer Speichereinheit 24 sowie mit einer Erfassungseinheit 25 verbunden. Die Erfassungseinheit 25 kann beispielsweise den Empfänger eines Positionsbestimmungssystems, wie GPS, darstellen. Alternativ oder zusätzlich kann die Erfassungseinheit einen oder mehrere Sensoren umfassen, die zur Erfassung der Fahrzeuggeschwindigkeit oder des Lenkradausschlagswinkel dienen.

Weiterhin ist in dem Endgerät 2 eine Ausgabeeinheit 26 vorgesehen. Diese ist mit der Anweisungseinheit 22 verbunden und dient als eine der Schnittstellen mit dem Benutzer. Insbesondere werden über die Ausgabeeinheit die in der Anweisungseinheit 22 erzeugten Anweisungen dem Benutzer entweder angezeigt, beispielsweise über ein Display, oder durch Sprachsignale mitgeteilt.

Schließlich weist das Endgerät 2 in der dargestellten Ausführungsform eine Initialisierungseinheit 27 auf, die mit einem Betätigungselement 28 verbunden ist.

Das Betätigungselement 28 ist in der dargestellten Ausführungsform eine Taste an dem Endgerät 2. Es liegt jedoch auch im Rahmen der Erfindung, dass das Betätigungselement 28 an einem anderen Teil des Fahrzeuges, wie beispielsweise dem Lenkrad des Fahrzeuges vorgesehen ist. In diesem Fall ist das Betätigungselement 28 mit dem Endgerät 2 verbunden.

Über das Betätigungselement 28 kann die Initialisierungseinheit 27 angesteuert werden. Ist die Initialisierungseinheit 27 beispielsweise ein Teil eines Programms, so kann dieses durch Betätigung der Taste 28 ausgewählt werden. Dadurch werden die in der Initialisierungseinheit 27 eingestellten Aktionen hervorgerufen. Insbesondere wird über die Betätigung des Betätigungselementes 28 und Ansteuerung der Initialisierungseinheit 27 ein Initialisierungssignal erzeugt, das die Kommunikationsschnittstelle 21 des Endgerätes 2 ansteuert und dadurch eine Kommunikation mit einer der zentralen Einheiten 4 oder 5 aufbaut beziehungsweise zur Übertragung von Daten und/Informationen verfügbar macht. Weiterhin kann über die Betätigung des Betätigungselementes 28 und Ansteuerung der Initialisierungseinheit 27 ein Initialisierungssignal erzeugt werden, das die Speichereinheit 24 ansteuert. Hierdurch kann es durch die Betätigung des Betätigungselementes zum Speichern von Daten und/oder Informationen in dem Endgerät kommen. Das erfindungsgemäße Verfahren wird im Folgenden aber unter Bezugnahme auf die erfindungsgemäße Ausführungsform, bei der Daten und Informationen aufgrund des Initialisierungssignals an die zentrale Einheit übermittelt werden, weiter beschrieben.

Die Vergleichseinheit 23 ist in der dargestellten Ausführungsform mit der Initialisierungseinheit 27 verbunden. Durch diese Verbindung wird es möglich die Initialisierungseinheit 27 bei einem definierten Vergleichsergebnis in der Vergleichseinheit 23 anzusteuern und zu aktivieren. In dem Fall, dass die Initialisierungseinheit 27 einen Teil eines Programms darstellt, kann durch die Aktivierung der Initialisierungseinheit 27 beispielsweise eine entsprechende Anzeige an der Ausgabeeinheit 26 erzeugt werden. Zu diesem Zeitpunkt wird die Ansteuerung der Initialisierungseinheit 27 durch das Betätigungselement 28 möglich.

Handelt es sich bei dem Betätigungselement 28 um eine Taste, die zur besseren Erreichbarkeit beispielsweise am Lenkrad des Fahrzeugs 3 oder einer anderen für den Fahrer gut erreichbaren Position angebracht ist, kann eine Sicherheitsfunktion vorgesehen sein, um ein versehentliches Aktivieren der Kommunikationsverbindung und ein damit verbundenes versehentliches Senden eines Berichtes zu vermeiden. Diese Sicherheitsfunktion besteht darin, dass das Betätigungselement 28 nur in den Fällen, in denen die Vergleichseinheit 23 eine Diskrepanz festgestellt hat, mit der Initialisierungseinheit 27 verbunden wird. Das Berühren der Taste 28 während einer normalen Fahrt wird daher keine Auslösung eines Berichts zur Folge haben. Um dem Benutzer dennoch die Möglichkeit zu geben auch bei einem von dem Endgerät 2 nicht erfassten Fehlverhalten des Navigationssystems 1 einen entsprechenden Bericht zu senden, wird in dieser Ausführungsform die Möglichkeit für den Fahrer geschaffen die Initialisierungseinheit 27 manuell zu aktivieren. Dies kann beispielsweise durch Auswahl einer Menüoption erfolgen.

Die Kommunikation zwischen dem Endgerät 2 und der mindestens einen zentralen Einheit 4 oder 5 kann eine einseitige Kommunikation sein. Insbesondere werden Information oder Daten von dem Endgerät 2 an die zentrale Einheit übermittelt. Hierbei handelt es sich um eine Kommunikation mittels Push. Die Kommunikation kann über Formate, wie beispielsweise HTTP, Email (SMTP), SMS oder der gleichen erfolgen. Diese Daten und/oder Informationen können automatisch aus dem Endgerät 2 ermittelt werden, sobald durch die Initialisierungseinheit 27 ein Initialisierungssignal ausgegeben wird. Diese Daten können hierbei die Ausgabe der Anweisungseinheit 22 sowie die für die erzeugte Anweisung verwendeten Daten der Erfassungseinheit 25 sein. Weiterhin kann die Ausgabe der Vergleichseinheit 23 an die zentrale Einheit 4 oder 5 übermittelt. Diese Daten und Informationen können vor der Übermittlung an die zentrale Einheit 4 oder 5 in dem Endgerät bearbeitet, insbesondere formatiert werden.

Alternativ ist es auch möglich, dass die Daten oder Informationen, die über die Kommunikationsschnittstelle 21 an die zentrale Einheit 4 oder 5 übermittelt werden, teilweise oder vollständig von dem Benutzer in das Endgerät 2 eingegeben werden. Hierzu kann eine Eingabevorrichtung (nicht gezeigt) an dem Endgerät 2 vorgesehen sein. Das Betätigungselement 28 kann Teil der Eingabevorrichtung sein.

Die Kommunikation zwischen dem Endgerät 2 und der oder den zentralen Einheiten 4 und 5 kann, wie in Figur 1 gezeigt, unmittelbar oder über ein zwischengeschaltetes mobiles Endgerät 6, beispielsweise Mobiltelefon, mittelbar erfolgen.

Die unmittelbare Kommunikation kann beispielsweise erfolgen, indem die Kommunikationsschnittstelle 21 in dem Endgerät 2 ein GPRS, UMTS, WiMAX oder WLAN Kommunikationsmodul ist. Es können auch Kommunikationsmodule zur Kommunikation mittels Standards wie B3G/4G verwendet werden. Die Kommunikation erfolgt hierbei über Funkübertragung. Es ist auch möglich bei einem so genannten Off-Board-Navigations-Endgerät 2, das mit einer zentralen Einheit 4, 5 kommuniziert, um beispielsweise Karteninformationen zu empfangen, die bestehende Kommunikationsmöglichkeit zu nutzen.

Die Kommunikation über ein zwischengeschaltetes mobiles Endgerät 6 kann beispielsweise über ein mit dem Endgerät 2 durch Bluetooth gepairten Mobiltelefon erfolgen. Die Verbindung zu dem Mobiltelefon kann aber auch über andere Methoden, wie UWB, WLAN oder eine Kabelverbindung (z.B. USB-Kabel) erfolgen.

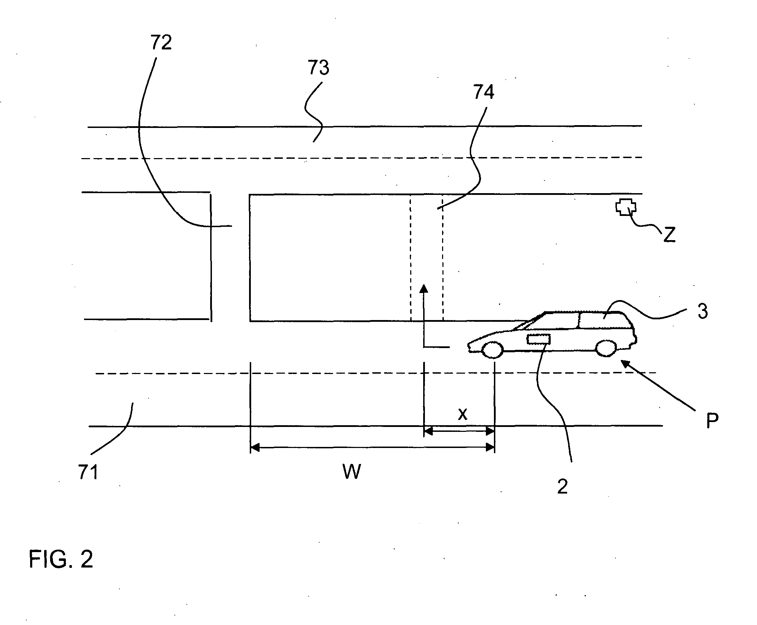

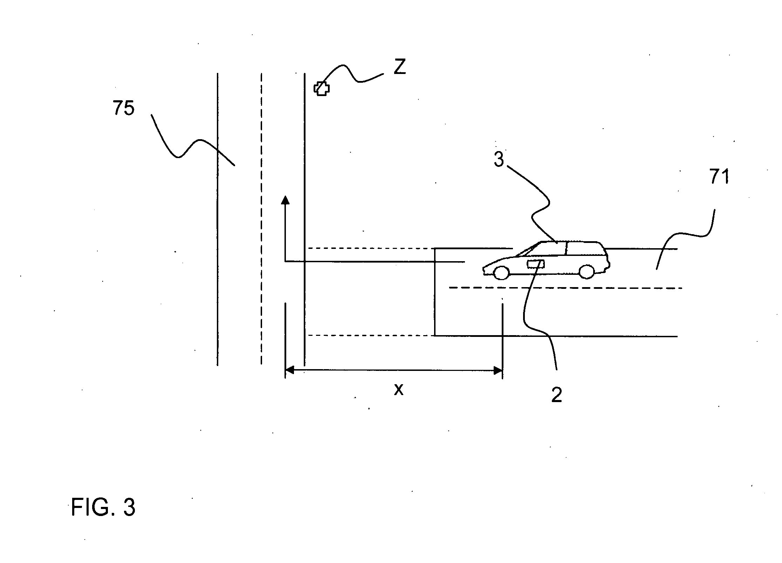

Die Verwendung der beschriebenen Komponenten wird nun unter Bezugnahme auf die Figuren 2 und 3 anhand von Beispielen beschrieben.

Das in Figur 2 gezeigte Fahrzeug 3 fährt auf der Straße 71. In dem Fahrzeug 3 ist ein Endgerät 2 eines Navigationssystems 1 vorgesehen. Der Fahrer hat an dem Endgerät 2 den Zielort Z eingegeben. Um zu diesem zu gelangen, müsste der Fahrer der Straße 71 für eine Wegstrecke W folgen und dann rechts in die Straße 72 einbiegen und von dort erneut rechts in die Straße 73 einbiegen. In dem dargestellten Beispiel ist in dem Kartenmaterial, das auf dem Endgerät 2 und/oder einer der zentralen Einheiten 4 oder 5 hinterlegt ist, zusätzlich zu den Straßen 71, 72 und 73 eine Straße 74 angegeben. Diese verbindet, wie die Straße 72 die Straßen 71 und 73, ist allerdings zu der Straße 72 versetzt, insbesondere nach rechts verschoben.

Bei der Bestimmung der von dem Fahrer zu wählenden Route, verwendet das Endgerät 2 das hierin hinterlegte oder gegebenenfalls auf einer zentralen Einheit 4, 5 zur Verfügung gestellte und von dem Endgerät 2 erreichbare Kartenmaterial. Nach dem Kartenmaterial ist die kürzeste Strecke zum Zielort Z über die Straße 74. Das Endgerät 2 wird daher über die Anweisungseinheit 22 die entsprechende Anweisung an den Benutzer erzeugen und diese über die Ausgabeeinheit 26 anzeigen beziehungsweise ansagen. Die Anweisung wird in diesem Fall lauten: Biegen Sie in x Metern recht ab. Hierbei stellt x die aktuelle Entfernung des Fahrzeuges 3 von der Straße 74 dar.

Der Fahrer kann dieser Anweisung nicht folgen, da die Straße 74 nicht existiert. Stattdessen wird der Fahrer dem Straßenverlauf der Straße 71 folgen müssen. Das Endgerät 2 kann dieses Verhalten des Fahrers beziehungsweise die Bewegung des Fahrzeuges 3 mittels der Erfassungseinheit 25 erfassen. Durch Vergleich der ausgegebenen Anweisung und des erfassten Verhaltens beziehungsweise der erfassten Bewegung in der Vergleichseinheit 23 wird in dem Endgerät 2 eine Diskrepanz festgestellt. Diese Diskrepanz beziehungsweise dieses Vergleichsergebnis führt dazu, dass die Initialisierungseinheit 27 aktiviert wird. Im konkreten Fall kann dies bedeuten, dass dem Fahrer auf dem Display eine Aufforderung gezeigt wird: Wollen Sie einen Bericht senden?

Wenn der Fahrer diese Fehlleitung seitens des Navigationssystems 1 berichten will, kann er das Betätigungselement 28, das heißt die Taste oder den Knopf betätigen.

Hierdurch können unterschiedliche Szenarien ausgelöst werden. In dem Endgerät 2 ist das auszulösende Szenario vorgegeben beziehungsweise ergibt sich aus dem Aufbau des Endgerätes 2.

Gemäß dem ersten Szenario kann das Endgerät 2 die Daten und Informationen, die zum Zeitpunkt des Auftretens der Diskrepanz vorlagen zusammenstellen und über die Kommunikationsschnittstelle 21 an die zentrale Einheit 4, 5 übermitteln. Insbesondere wird die Position des Fahrzeuges 3 übermittelt. Zusätzlich kann auch die Position, an der die die Diskrepanz anzeigende Anweisung ausgegeben wurde und gegebenenfalls das Verhalten beziehungsweise die Bewegung des Fahrzeuges 3 nach der Ausgabe der Anweisung übermittelt werden.

In dem vorliegenden Fall könnte der zentralen Einheit 4 oder 5 somit die Information übermittelt werden, dass an der Position P die Anweisung ausgegeben wurde in x Metern rechts abzubiegen und dass das Fahrzeug 3 entgegen der Anweisung nach x Metern weiter geradeaus gefahren ist.

Alternativ kann der zentralen Einheit 4 oder 5 von der Position, die der Position entspricht, an der der Fahrer bestätigt hat, die Information übermittelt werden, dass er einen Bericht senden will und damit eine Abweichung oder Unregelmäßigkeit berichten will.

Schließlich ist es auch möglich, dass durch die Betätigung der Taste 28 der zentralen Einheit 4 oder 5 Daten und/oder Informationen übermittelt werden, die von dem Fahrer an dem Endgerät 2 eingegeben wurden. In diesem Fall kann der Fahrer beispielsweise über eine Tastatur die aufgetretene Fehlleitung durch das Navigationssystem 1 schildern. Auch bei dieser Variante wird vorzugsweise zumindest die Position des Fahrzeuges 3 an die zentrale Einheit 4 oder 5 übermittelt, zu dem die Diskrepanz aufgetreten ist.

Mit diesen Informationen beziehungsweise Daten wird es dem Betreiber des Navigationssystems 1 beziehungsweise dem Kartenhersteller möglich entsprechende Maßnahmen einzuleiten. Diese Maßnahmen können beispielsweise die Korrektur des Kartenmaterials anhand der übermittelten Daten und/oder Informationen, die Überprüfung der übermittelten Daten und/oder Informationen, beispielsweise durch Abgleich mit Daten und/oder Informationen, die von anderen Benutzern empfangen wurden, oder das Aussenden von Personal zur Überprüfung der Gegebenheiten Vorort sein. Durch den Bericht beziehungsweise das Feedback des Fahrers kann somit die Qualität des Navigationssystems 1 verbessert werden.

In einem weiteren Beispiel ist im Gegensatz zu der unter Bezugnahme auf Figur 2 gezeigten Situation die Straße 74 existent und das Navigationssystem 1 leitet den Fahrer dennoch über die Straße 72 zu dem Zielort Z. Folgt der Fahrer der Anweisung des Navigationssystems 1 beziehungsweise des Endgerätes 2, so tritt zwischen der Anweisung und der Bewegung des Fahrzeuges 3 keine Diskrepanz auf. In diesem Fall wird somit die Initialisierungseinheit 27 nicht automatisch aktiviert. Insbesondere wird dem Benutzer keine Aufforderung auf dem Display angezeigt einen Bericht zu senden. Bei dem erfindungsgemäßen Endgerät kann für diesen Fall aber vorgesehen sein, dass der Fahrer beispielsweise über ein Bedienungsmenü zu einer Option gelangt, in der er einen Bericht initiieren kann.

Ist der Fahrer mit der Umgebung vertraut, so kann dieser bei der Anweisung die existente und zielführende Straße 74 zu passieren und stattdessen in die Straße 72 einzubiegen, einen entsprechenden Bericht an die zentrale Einheit 4 oder 5 senden. Dieser Bericht kann über die Eingabevorrichtung in das Endgerät 2 eingegeben werden.

Neben den beschriebenen Berichten, die an die zentrale Einheit 4 oder 5 gesandt werden können, ist es auch möglich, dass bei Betätigung des Betätigungselementes 26 der zentralen Einheit lediglich die Information übermittelt wird, dass an der Position des Fahrzeuges eine Abweichung oder Abnormalität vorliegt. Die weiteren Details der Abweichung sind in diesem Fall von dem Betreiber des Navigationssystems 1 selber zu ermitteln.

Mit der vorliegenden Erfindung kann auch ein Fall erfasst werden, in dem die in dem Kartenmaterial hinterlegten Informationen mit den tatsächlichen Gegebenheiten übereinstimmen, aber dennoch eine Fehlleitung seitens des Navigationsgerätes auftritt. Dies kann beispielsweise der Fall sein, wenn das in dem Endgerät 2 hinterlegte Programm einen Fehler beziehungsweise Bug aufweist. Wird in einem solchen Fall eine nicht durchführbare Anweisung ausgegeben, so kann durch den Fahrer ein entsprechender Bericht initiiert werden.

Die zentrale Einheit 4 oder 5, an die der Bericht übermittelt wird, kann in dem Endgerät 2 festgelegt sein. Alternativ oder zusätzlich ist es aber auch möglich, dass der Empfänger des Berichts aufgrund des Inhaltes des Berichts ermittelt wird. Hierbei wird vorzugsweise in dem Endgerät 2 überprüft, ob die Diskrepanz aufgrund einer Abweichung des Kartenmaterials von den tatsächlichen Gegebenheiten oder aufgrund eines Fehlers im Programm des Endgerätes 2 aufgetreten ist. Im erstgenannten Fall kann der Bericht an den Kartenhersteller und gegebenenfalls zusätzlich an den Hersteller beziehungsweise Betreiber des Navigationssystems übermittelt werden. Im letzteren Fall hingegen wird der Bericht vorzugsweise nur an den Hersteller oder Betreiber des Navigationssystems 1 übermittelt.

In der Figur 3 ist eine weitere Situation gezeigt, in der die vorliegende Erfindung vorteilhaft zum Einsatz kommen kann.

In der dargestellten Situation handelt sich bei der Straße 71, auf der sich das Fahrzeug 3 befindet, um eine Sackgasse. In der Straßenkarte, die in dem Endgerät 2 und/oder der zentralen Einheit 4 oder 5 hinterlegt ist, ist diese Straße 71 hingegen als durchgehende Straße mit Anbindung an eine Straße 75 vermerkt. Befindet sich der Zielort Z an der Straße 75, so wird das Endgerät 2 aufgrund der Karteninformationen dem Fahrer die Anweisung geben nach x Metern auf die Straße 75 abzubiegen.

Da der Fahrer dieser Anweisung aufgrund der tatsächlichen Bedingungen nicht folgen kann, wird er wenden und eine alternative Route finden müssen.

Nach der Ausgabe der Anweisung in x Metern auf die Straße 75 abzubiegen, wird das Endgerät 2 den Richtungswechsel des Fahrzeuges 3, insbesondere das Umkehren, erkennen. Dies kann durch die Erfassungseinheit 25 erfolgen, wobei Daten des Positionserkennungssystems und/oder Sensordaten, wie beispielsweise der Lenkradausschlagwinkel, verwendet werden können.

Die Diskrepanz kann durch Vergleich der Anweisung mit den erfassten Daten in der Vergleichseinheit 23 erkannt werden. Beim Erkennen dieser Diskrepanz können die unter Bezugnahme auf Figur 2 beschriebenen Maßnahmen eingeleitet werden. Insbesondere kann beispielsweise die Initialisierungseinheit 27 aktiviert werden und/oder die Position der Diskrepanzerkennung gespeichert werden.

In einigen Fällen, beispielsweise aufgrund der Kenntnis der Umgebung oder einer Planänderung, folgt der Fahrer häufig den Anweisungen eines Navigationssystems 1 beziehungsweise des Endgerätes 2 bewusst nicht. Um die erfindungsgemäß mögliche Rückmeldungsfunktion nicht als Störung für den Fahrer erscheinen zu lassen, können Automatismen vorgesehen sein. Es ist daher möglich, dass die Aktivierung der Initialisierungseinheit 27, die beispielsweise zur Anzeige einer Aufforderung führen kann, nur für eine begrenzte Zeitdauer erfolgt. Will der Fahrer entweder wegen einer bewussten Abweichung von der Anweisung des Navigationssystems 1 oder aus anderen Gründen keinen Bericht versenden, so wird die Initialisierungseinheit 27 nach der vorgegebenen Zeit wieder deaktiviert und eine angezeigte Aufforderung wieder ausgeblendet. Der Fahrer wird daher durch die Feedback-Option nicht belästigt.

Mit der vorliegenden Erfindung wird es somit möglich zumindest zwei Situationen abzudecken, in denen eine Fehlleitung oder nicht optimale Führung durch das Navigationssystem 1 erfolgt. Zum einen kann eine Rückmeldung von dem Endgerät 2 des Navigationssystems 1 angeboten werden, wenn die Umstände für ein Fehlverhalten sprechen. Zum anderen ist es aber für den Fahrer unabhängig davon auch möglich einen seines Erachtens erkannten Qualitätsmangel durch Eigeninitiative zu berichten.

Der Vorteil bei allen erfindungsgemäßen Varianten liegt darin, dass der Bericht über ein Fehlverhalten des Navigationssystems von dem Fahrer unmittelbar zu dem Zeitpunkt erfolgen kann, an dem das Fehlverhalten erkannt wird. Ein späterer Besuch einer Webseite des Herstellers des Navigationssystems oder des Kartenherstellers beziehungsweise ein späterer Anruf bei den entsprechenden Herstellern ist nicht notwendig. Hierdurch kann die Bereitschaft der Benutzer eines Navigationssystems zur Mitteilung eines Fehlverhaltens gesteigert werden und dadurch die Qualität des Navigationssystems zuverlässig gesteigert werden.

Der Benutzer kann erfindungsgemäß mit nur einem Knopfdruck ein Qualitäts-Feedback einleiten und stellt dadurch dem Hersteller des Navigationssystems alle notwendigen Informationen zur Verfügung, um den Vorfall analysieren zu können und die Qualität des Navigationssystems beziehungsweise des in dem Navigationssystem verwendeten Kartenmaterial durch Aktualisierung oder Korrektur zu steigern.

Zudem kann mit der vorliegenden Erfindung nicht nur eine Auslassung eines Straßenverlaufes in dem Kartenmaterial eines Navigationssystems sondern auch ein Karteneintrag, der über die tatsächlichen Verhältnisse hinausgeht, sowie ein Fehlverhalten innerhalb des Endgerätes, beispielsweise eine Fehlprogrammierung in dem Programm, erkannt und an den entsprechenden Hersteller berichtet werden.

## Patentansprüche

1. Endgerät (2) eines Navigationssystems (1) das eine Anweisungseinheit (22) zur Erzeugung von Anweisungen zum Richtungswechsel oder zur Beibehaltung einer gewissen Richtung an den Benutzer des Endgerätes (2), zumindest ein Kommunikationsmittel (21) und zumindest eine Initialisierungseinheit (27) umfasst, wobei das Kommunikationsmittel eine Kommunikationsschnittstelle (21) zur Kommunikation mit mindestens einer zentralen Einheit (4,5) des Navigationssystems (1), die eine zentrale Rechnereinheit (4) des Herstellers oder Betreibers des Navigationssystems oder eine zentrale Rechnereinheit (5) des Kartenherstellers ist, darstellt und die Initialisierungseinheit (27) zur Erzeugung eines Initialisierungssignals zum Initialisieren der Kommunikation mit der zentralen Einheit (4, 5) durch den Benutzer des Endgerätes (2) dient, wobei die Initialisierungseinheit (27) mit der Kommunikationsschnittstelle (21) verbunden ist, **dadurch gekennzeichnet, dass** das Endgerät eine Vergleichseinheit (23) umfasst, wobei die Vergleichseinheit (23) mit dem Ausgang der Anweisungseinheit (22) zum Vergleichen von mindestens einer erzeugten Anweisung an den Benutzer mit mindestens einer von dem Endgerät (2) erfassten Richtungs- oder Positionsinformation verbunden ist, die Vergleichseinheit (23) mit der Initialisierungseinheit (27) zum Aktivieren der Initialisierungseinheit (27) in Abhängigkeit des Vergleichsergebnisses verbunden ist und wobei das Endgerät so ausgebildet ist, dass über das Kommunikationsmittel (21) Daten und/oder Informationen unmittelbar nach deren Ermittlung an die mindestens eine zentrale Einheit (4, 5) übermittelt werden, wobei die übermittelten Daten und/oder Informationen die Diskrepanz zwischen den von dem Endgerät (2) erzeugten Anweisungen und den von dem Endgerät (2) erfassten Positions- und/oder Richtungsinformationen umfassen.

2. Endgerät nach Anspruch 1, **dadurch gekennzeichnet, dass** dieses zumindest eine Eingabevorrichtung (28) zur Eingabe von Informationen durch den Benutzer umfasst.

3. Endgerät nach einem der Ansprüche 1 oder 2, **dadurch gekennzeichnet, dass** die Initialisierungseinheit (27) einen Betätigungsknopf umfasst, der optional auf einer Anzeige (26) des Endgerätes (2) angezeigt wird.

4. Verfahren zur Übermittlung von Daten und/oder Informationen von einem Endgerät (2) eines Navigationssystems (1), mit folgenden von dem Endgerät (2) ausgeführten Schritten:
a) Erkennen eines Initialisierungssignals, das durch ein von dem Benutzer betätigbares Betätigungselement (28), das mit einer Initialisierungseinheit (27) verbunden ist,erzeugt wird,
b) Ermitteln von zu übermittelnden Daten und/oder Informationen in dem Endgerät (2) und
c) Aktivierung eines Kommunikationsmittels, das eine Kommunikationsschnittstelle (21) darstellt, zur Kommunikation mit einer zentralen Einheit (4, 5) des Navigationssystems (1), die eine zentrale Rechnereinheit (4) des Herstellers oder Betreibers des Navigationssystems oder eine zentrale Rechnereinheit (5) des Kartenherstellers ist, aufgrund des erkannten Initialisierungssignals, **dadurch gekennzeichnet, dass** das Verfahren weiterhin den Schritt umfasst, dass von dem Endgerät (2) erzeugte Anweisungen zum Richtungswechsel oder zur Beibehaltung einer gewissen Richtung an den Benutzer mit Richtungs- oder Positionsinformationen, die von dem Endgerät (2) erfasst wurden, verglichen werden und das Endgerät (2) in Abhängigkeit des Vergleichsergebnisses die Initialisierungseinheit (27) aktiviert und
dass das Verfahren weiterhin den Schritt umfasst, dass die Daten und/oder Informationen, die die Diskrepanz zwischen den von dem Endgerät (2) erzeugten Anweisungen und den von dem Endgerät (2) erfassten Positions- und/oder Richtungsinformationen umfassen, unmittelbar nach deren Ermittlung über die Kommunikationsschnittstelle (21) an die mindestens eine zentrale Einheit (4, 5) übermittelt werden.

5. Verfahren nach Anspruch 4, **dadurch gekennzeichnet, dass** in Abhängigkeit des Vergleichsergebnisses die Erzeugung des Initialisierungssignals ermöglicht wird oder das Endgerät (2) in Abhängigkeit des Vergleichsergebnisses die Verbindung zu der Kommunikationsschnittstelle (21) herstellt und deren Aktivierung durch ein Initialisierungssignal ermöglicht.

6. Verfahren nach einem der Ansprüche 4 oder 5, **dadurch gekennzeichnet, dass** die zu übermittelnden Daten und/oder Informationen von dem Endgerät (2) empfangene beziehungsweise erfasste Daten und/oder Informationen sind oder in dem Endgerät (2) erzeugt werden und/oder die Daten und/oder Informationen zumindest teilweise von dem Benutzer in das Endgerät (2) eingegeben werden.

7. Verfahren nach einem der Ansprüche 4 bis 6, **dadurch gekennzeichnet, dass** das Endgerät (2) über die Kommunikationsschnittstelle (21) zur Kommunikation mit der zentralen Einheit (4, 5) eine Verbindung zu einem mobilen Endgerät (6) aufbaut, über das die Kommunikation zwischen dem Endgerät (2) und der zentralen Einheit (4, 5) geleitet werden kann.

8. Verfahren nach einem der Ansprüche 4 bis 7, **dadurch gekennzeichnet, dass** an der zentralen Einheit (4, 5) die von dem Endgerät (2) empfangenen Daten und / oder Informationen mit Karteninformationen einer digitalen Karte verarbeitet werden und optional an der zentralen Einheit (4, 5) die von dem Endgerät (2) empfangenen Daten und/oder Informationen zumindest zeitweise gespeichert werden.

## Claims

1. Terminal (2) of a navigation system (1), comprising an instruction unit (22) for generating instructions to the user of the terminal (2) to change direction or to maintain a specific direction, at least one communication means (21) and at least one initialising unit (27), wherein the communication means is a communication interface (21) for communication with at least one central unit (4,5) of the navigation system (1), which is a central processing unit (4) of the manufacturer or provider of the navigation system or a central processing unit (5) of the map manufacturer, and the initialising unit (27) serves for generating an initialising signal for initialising the communication with the central unit (4, 5) by the user of the terminal (2), wherein the initialising unit (27) is connected to the communication interface (21), **characterized in that** the terminal comprises a comparison unit (23), wherein the comparison unit (23) is connected with the outlet of the instruction unit (22) for comparing of at least one generated instruction to the user with at least one directional or positional information detected by the terminal (2), the comparison unit (23) is connected with the initialising unit (27) for activating the initialising unit (27) dependent on the comparison result and data and/or information is transmitted to the at least one central unit (4, 5) immediately after their determination, wherein the transmitted data and/or information comprise the discrepancy between the instructions generated by the terminal (2) and the positional and/or directional information detected by the terminal (2).

2. Terminal according to claim 1, **characterized in that** it comprises at least one input device (28) for input of information by the user.

3. Terminal according to anyone of claims 1 or 2, **characterized in that** the initialising unit (27) comprises an activation button, which is optionally displayed on a display (26) of the terminal (2).

4. Method for transmitting data and/or information from a terminal (2) of a navigation system (1) with the following steps which are carried out by the terminal (2):
a. Detecting an initialising signal, which is generated by an activation element (28) which can be activated by the user and which is connected with an initialising unit (27),
b. Determining of data and/or information in the terminal (2) which is to be transmitted and
c. Activating a communication means, which is a communication interface (21), for communication with a central unit (4, 5) of the navigation system (1), which is a central processing unit (4) of the manufacturer or provider of the navigation system or a central processing unit (5) of the map manufacturer, based on the detected initialising signal, **characterized in that** the method further comprises the step, that instructions to the user generated by the terminal (2) to change direction or to maintain a specific direction is compared with directional or positional information, which has been detected by the terminal (2) and the terminal (2) activates the initialising unit (27) depending on the comparison result and
that the method further comprises the step that the data and/or information which comprise the discrepancy between the instructions generated by the terminal and the positional and/or direction information detected by the terminal (2), is transmitted via the communication interface (21) to the at least one central unit (4, 5) immediately after its determination.

5. Method according to claim 4, **characterized in that** depending on the comparison result the generating of the initialising signal is made possible or the terminal (2) establishes the connection to the communication interface (21) depending on the comparison result and makes the activation thereof possible by means of an initialising signal.

6. Method according to anyone of claims 4 or 5, **characterized in that** the data and/or information which is to be transmitted is data and/or information which has been received by the terminal (2) or data and/or information which is generated in the terminal (2) and/or the data and/or information is at least partially input by the user into the terminal (2).

7. Method according to anyone of claims 4 to 6, **characterized in that** the terminal (2) establishes a connection to a mobile terminal (6) via the communication interface (21) for communication with the central unit (4, 5), via which the communication between the terminal (2) and the central unit (4, 5) can be guided.

8. Method according to anyone of claims 4 to 7, **characterized in that** the data and/or information which was received at the terminal (2) is processed with map information of a digital map at the central unit (4, 5) and the data and/or information which was received at the terminal (2) is optionally at least temporarily stored at the central unit (4, 5).

## Revendications

1. Terminal (2) d'un système de navigation (1) qui comporte : une unité d'instructions (22) destinée à générer à l'intention de l'utilisateur du terminal (2) des instructions pour changer de direction ou conserver une certaine direction, au moins un moyen de communication (21) et au moins une unité d'initialisation (27), le moyen de communication constituant une interface de communication (21) destinée à la communication avec au moins une unité centrale (4, 5) du système de navigation (1) qui est une unité centrale de calcul (4) du fabricant ou de l'exploitant du système de navigation ou une unité centrale de calcul (5) du fabricant de cartes, et l'unité d'initialisation (27) destinée à la génération d'un signal d'initialisation servant à initialiser la communication avec l'unité centrale (4, 5) par l'utilisateur du terminal (2), l'unité d'initialisation (27) étant reliée à l'interface de communication (21), **caractérisé en ce que** le terminal comporte une unité de comparaison (23), l'unité de comparaison (23) étant reliée à la sortie de l'unité d'instructions (22) afin de comparer au moins une instruction générée à l'intention de l'utilisateur avec au moins une information de position ou de direction détectée par le terminal (2), l'unité de comparaison (23) étant reliée à l'unité d'initialisation (27) afin d'activer l'unité d'initialisation (27) en fonction du résultat de la comparaison et le terminal étant conçu de manière que des données et/ou des informations soient transférées, immédiatement après leur détection, à l'unité centrale ou aux unités centrales (4, 5) par le moyen de communication (21), les données et/ou informations transférées comprenant la divergence entre les instructions générées par le terminal (2) et les informations de position et/ou de direction détectées par le terminal (2).

2. Terminal selon la revendication 1, **caractérisé en ce que** ledit terminal comporte au moins un dispositif d'entrée (28) permettant à l'utilisateur d'entrer des informations.

3. Terminal selon l'une quelconque des revendications 1 ou 2, **caractérisé en ce que** l'unité d'initialisation (27) comporte un bouton d'actionnement qui est affiché en option sur l'affichage (26) du terminal (2).

4. Procédé de transmission de données et/ou d'informations par un terminal (2) d'un système de navigation (1), comportant les étapes suivantes exécutées par le terminal (2) :
a) reconnaître un signal d'initialisation qui est généré par un élément d'actionnement (28) qui peut être actionné par l'utilisateur et est relié à une unité d'initialisation (27),
b) déterminer dans le terminal (2) les données et/ou informations à transmettre, et
c) activer, en raison du signal d'initialisation reconnu, un moyen de communication qui constitue une interface de communication (21) à des fins de communication avec une unité centrale (4, 5) du système de navigation (1) qui est une unité centrale de calcul (4) du fabricant ou de l'exploitant du système de navigation ou une unité centrale de calcul (5) du fabricant de cartes,
**caractérisé en ce que** le procédé comporte en outre l'étape au cours de laquelle des instructions générées par le terminal (2) à l'intention de l'utilisateur pour changer de direction ou pour conserver une certaine direction sont comparées avec des informations de direction ou de position qui ont été détectées par le terminal (2) et le terminal (2) active l'unité d'initialisation (27) en fonction du résultat de la comparaison, et
**en ce que** le procédé comporte en outre l'étape au cours de laquelle les données et/ou informations, qui comportent la divergence entre les instructions générées par le terminal (2) et les informations de position et/ou de direction détectées par le terminal (2), sont transmises par l'interface de communication (21) à l'unité centrale ou aux unités centrales (4, 5) immédiatement après leur détermination.

5. Procédé selon la revendication 4, **caractérisé en ce que** la génération du signal d'initialisation est rendue possible en fonction du résultat de la comparaison ou **en ce que** le terminal (2) établit la liaison à l'interface de communication (21) en fonction du résultat de la comparaison et rend possible son activation par un signal d'initialisation.

6. Procédé selon l'une quelconque des revendications 4 ou 5, **caractérisé en ce que** les données et/ou informations à transmettre sont des données et/ou informations reçues respectivement détectées par le terminal (2) ou générées dans le terminal (2) et/ou les données et/ou informations sont entrées dans le terminal (2) au moins partiellement par l'utilisateur.

7. Procédé selon l'une quelconque des revendications 4 à 6, **caractérisé en ce que**, par le biais de l'interface de communication (21) destinée à la communication avec l'unité centrale (4, 5), le terminal (2) établit une liaison à un terminal mobile (6) par le biais duquel la communication peut être menée entre le terminal (2) et l'unité centrale (4, 5).

8. Procédé selon l'une quelconque des revendications 4 à 7, **caractérisé en ce que**, dans l'unité centrale (4, 5), les données et/ou informations reçues par le terminal (2) sont traitées avec des informations cartographiques d'une carte numérique et **en ce que**, en option, les données et/ou informations reçues par le terminal (2) sont enregistrées au moins temporairement dans l'unité centrale (4, 5).
